Europäisches Patentamt

European Patent Office

Office européen des brevets

(19)

(11) Publication number: **0 075 689**
**A1**

(12) # EUROPEAN PATENT APPLICATION

(21) Application number: **82107229.5**

(22) Date of filing: **10.08.82**

(51) Int. Cl.³: **G 01 N 21/21**
**G 01 J 4/04**

(30) Priority: **28.09.81 US 306559**

(43) Date of publication of application:
**06.04.83 Bulletin 83/14**

(84) Designated Contracting States:
**DE FR GB**

(71) Applicant: **International Business Machines
Corporation**

**Armonk, N.Y. 10504(US)**

(72) Inventor: **Chastang, Jean-Claude Andre
68 Hadfield Road
Mahopac New York 10541(US)**

(72) Inventor: **Hildenbrand, Walter William
Birch Hill Acres
Brewster New York 10509(US)**

(72) Inventor: **Levanoni, Menachem
623 Giarvano Drive
Yorktown Heights New York 10598(US)**

(74) Representative: **Lewis, Alan John
IBM United Kingdom Patent Operations Hursley Park
Winchester, Hants, S021 2JN(GB)**

(54) Optical instruments for viewing a sample surface.

(57) The Figure shows the optical diagram of a static photometric polarimeter for deriving information about a sample (S). A beam from a laser source passes through a beam splitter (BS) which reflects part of the beam to a detector (D₀) and transmits the remainder towards the specimen (S). The transmitted beam is plane polarised in a plane at 45° to the incident plane. The reflection of the beam from the surface of sample (S) is passed to a polarizing beam splitter (PBS). One portion of the split reflected beam goes to a detector (Dₛ) which measures the perpendicular polarization component of the beam and the other portion of the split beam goes to the detector (Dₚ) which measures the parallel polarized portion of the reflected beam. The outputs of the detectors (D₀), (Dₛ) and (Dₚ) are supplied to a data processor and information about the specimen derived.

FIG. 2

OPTICAL INSTRUMENTS FOR

VIEWING A SAMPLE SURFACE

The invention relates to optical instruments for viewing a sample surface.
Such instruments are used in polarimetry and ellipsometry.

Description of the Prior Art

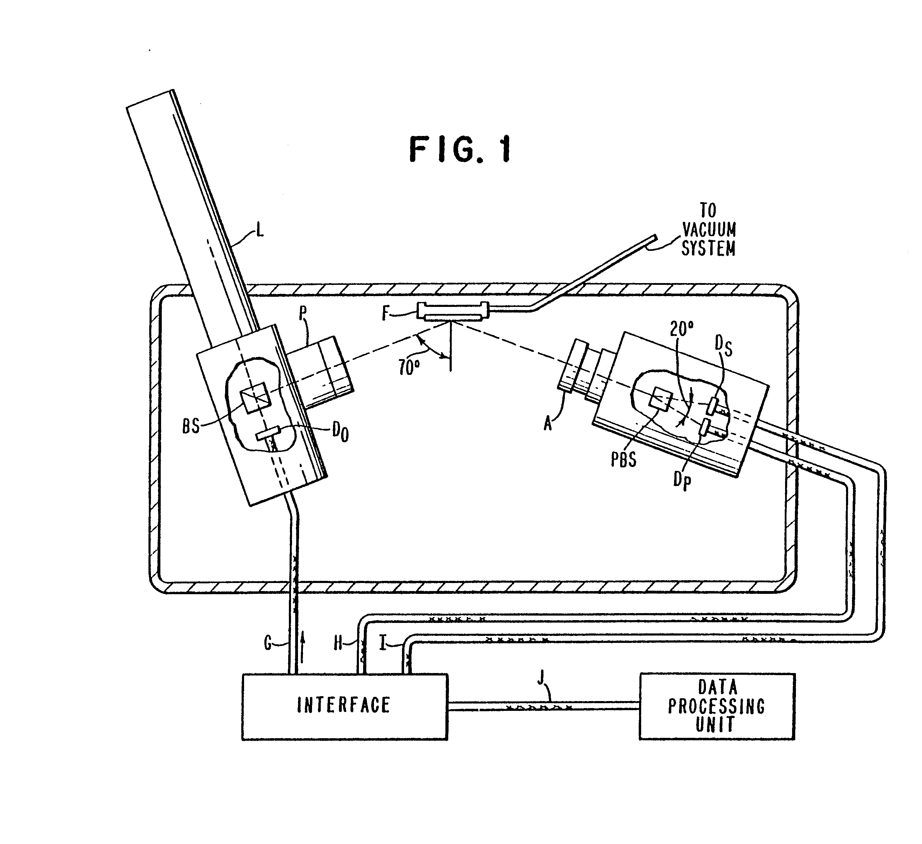

T. Smith wrote an article entitled "An Automated Scanning Ellipsometer"
in Surface 56, No. 1 212-220 (June 1976) which shows an automated
ellipsometer in FIG. 1 thereof with a polarized beam splitter 4 which
supplies a fraction of the beam from the light source 1. The beam, which
passes through the polarizer, is reflected from the surface of a sample.
A portion of the reflected beam reaches a 45° analyzer prism 6 and it is
measured by a detector 8. Another portion of the reflected beam 7
reaches a second analyzer prism which splits the portion of the reflected
beam it receives into parallel p and perpendicularly s polarized segments.
There are detectors connected to receive the separate p and s segments.
It should be noted that the prism 6 and the prism 7 are separate but
juxtaposed. Accordingly, some of the light in the beam reflected from
the surface of the sample S may not be received by any one of the three
detectors 8, 9, and 10.

In addition, three detectors are used to measure the reflected beam
rather than the two detectors required in our system. Furthermore,
since the beam is split from side to side, the detectors are dependent
upon the uniformity of the beam from side to side. Smith requires
careful alignment of the beam.

The sources of error in Smith overcome by the present arrangement are 1)
alignment of the beam; 2) uniformity of the beam, and 3) uniformity of
the sample. In addition, the present arrangement permits focussing upon
sample object surface areas as small as 1 $mil^2$ whereas Smith cannot,
since his error is on the order of a few $mils^2$, Smith states that he
requires uniform illumination (p. 219) and a large area (p. 213).

0075689

- 2 -

At page 220 of the Smith article under comments made at the conference
where the article was presented, it is stated by M. J. Dignam "Rather
than having two beams, we had in mind placing a reflected beam splitter
with plates at normal incidence and then analyzing each of the beams
with a polarizing splitter as you have done.  The polarizing beam splitter
is properly oriented to get all the information from a single beam.  You
still have the calibration problems and the calibration of the beam
splitter but I think it can be done with a single beam".  That arrangement
would use four detectors at the output end in place of the three detectors
of Smith and the two detectors employed here as we interpret that statement
made by M. J. Dignam.  The result is a more complex set of twice as many
data outputs, and five detectors instead of three with the attendant
disadvantages of more sources of error and cost of computation.  The
present system employs a novel technique, which permits use of only
three detectors, whereas heretofore, it had been believed that four
detectors would be required.

## Summary of the Invention

In accordance with this invention an instrument is provided comprising a
source of a polarized light beam directed towards a sample position.
Means is provided for supporting a sample in the sample position.  A
polarizing beam splitter is supported for reception of the reflection of
the beam from the surface of a sample in the sample position and a pair
of detectors for p and s beams is positioned to receive the p and s
portions of said light beam from the polarizing beam splitter.  Preferably
the source includes means for polarization of the light beam, which
preferably polarizes the light beam at 45°, or provides circular polarization
of the light beam.  Preferably a beam splitter splits the light beam and
directs a portion thereof to a third detector and directs the remainder
of the light beam to the sample.

The invention therefore provides an optical instrument comprising a source of polarised light beam directed towards a sample position, means for supporting a sample in the sample position, and analysising means for reception of the beam reflected from the sample characterised in that the analysing means comprise a polarising beam splitter and a pair of detectors positioned respectively to receive the perpendicularly polarised portions of the light beam emerging from the beam splitter.

The invention will now be further described with reference to the accompanying drawings, in which:-

FIG. 1 shows an optical polarimeter system in accordance with this invention.

FIG. 2 shows a schematic diagram of an optical arrangement and sensors in a modified polarimeter system in accordance with this invention.

FIG. 3 shows beams of light refracted and reflected at an interface with p polarization.

## Description of the Preferred Embodiment

FIG. 1 shows a chamber containing sample S held in place on fixture F by means of pressure induced by vacuum line V. A laser L (in this paricular case shown as about eleven inches long) is directed towards beam splitter BS which passes a portion of the beam to photodiode $D_o$ and reflects the remainder of the beam towards the sample S. The beam reflected from beam splitter BS passes through polarizer P. In principle polarizer P can be omitted since the laser beam is polarized. Polarizer P enhances the polarization. The beam is directed at the sample at an angle $\emptyset$ of 70° with respect to a line normal to the surface of the sample S. Angles which are preferred range from a few degrees to close to 90°. At 45° a measurement of a single interface cannot be done but a multiple layer structure can be measured. The beam reflected from the surface of the sample is passed through aperture A (which eliminates spurious light) to a polarizing beam splitter PBS (comprising preferably a Wollaston prism) which produces a first beam directed to the photodiode $D_p$ and a second beam directed to a second photodiode $D_s$ with the two beams separated in the plane defined by the beams by an angle of 20°. Any angle can be used, but larger angles are preferred in a practical application. The outputs of sensor $D_o$, sensor $D_p$ and sensor $D_s$ pass through lines G, H and I respectively to the interface which is connected by cable J to the data processing unit. As will be explained below, the polarizing beam splitter produces two different polarizations of the beam for the two photodiodes $D_p$ and $D_s$.

The polarimeter of the instant invention is an instrument of the static photometric type and its resolving time is limited only by the rise times of its photodetectors.

As an alternative, beam splitter BS and sensor $D_o$ can be omitted if a standard reference sample is available to calibrate measurements. The purpose of beam splitter BS and sensor $D_o$ is to eliminate the effects of variation of the intensity of the laser beam from laser L.

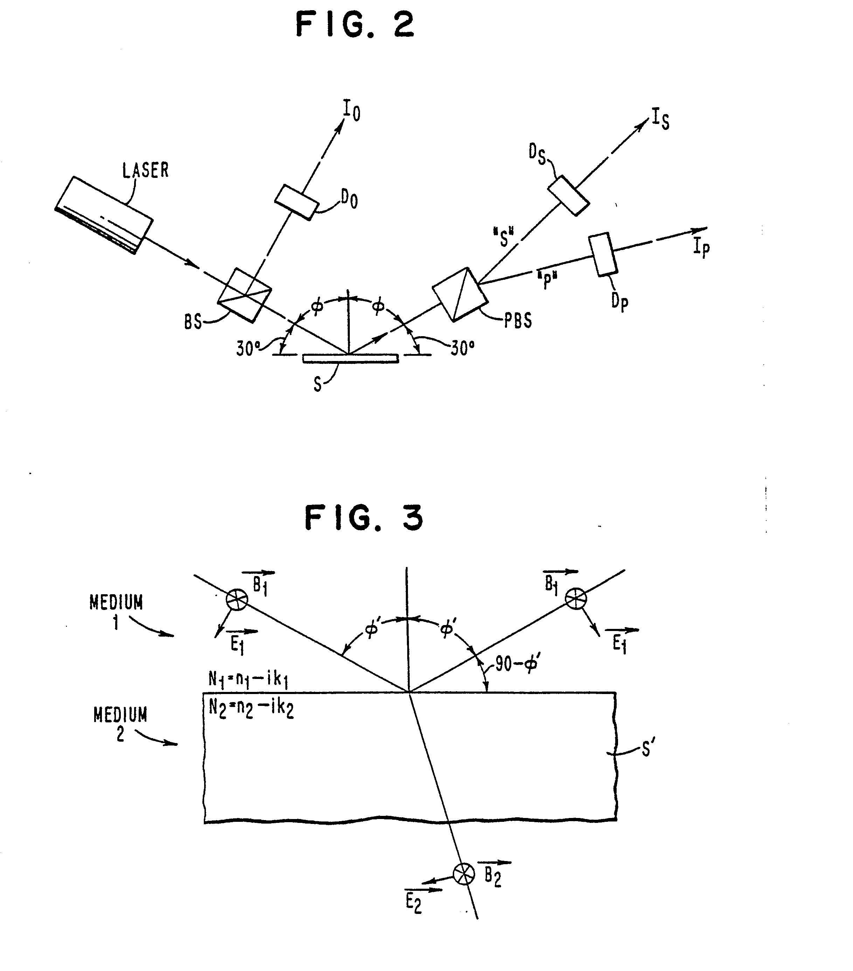

The polarimeter, shown in FIG. 2, utilizes a single polarized beam (polarized, say, at 45° to the plane of incidence) from a small HeNe laser L (or any other collimated beam in combination with a polarizer). A beam splitter BS directs a fraction of the incident beam to normalizing detector $D_o$. A polarizing beam splitter PBS (such as a Wollaston prism) splits the reflected beam from sample S into its "p" (parallel) and "s" (perpendicular) polarization components which are then monitored by detectors $D_p$ and $D_s$.

From the light intensities, $I_o$, $I_p$ and $I_s$, recorded by detectors $D_o$, $D_p$ and $D_s$, the "p" and "s" intensity reflection coefficients $R_p$ and $R_s$ can be derived. For example, for light polarized at 45° and an incident beam splitting ratio of 1:2 (i.e., $I_o$ equals one-third of the source beam intensity), the intensity reflection coefficients are given by

$$R_p = \frac{I_p}{I_o} \text{ and } R_s = \frac{I_s}{I_o}$$

It is shown in equations below that knowledge of $R_p$ and $R_s$ is sufficient to determine the polarization state of the reflected light (or equivalently, the complex index of refraction of the sample). This statement is valid for all angles of incidence other than 0° (normal incidence), 45° and 90° (grazing incidence). Since there is no mechanical motion during the operation of this instrument and the needed optical information is recorded by three stationary photodetectors, the response time of the ellipsometer is determined solely by the detectors rise times which can be very small. Therefore, this instrument measures variations in refractive indices and extinction coefficients in very rapid time scales.

The measurement accuracy of this device is highly dependent on its photodetectors. Highly linear detectors (such as solid state photodiodes) are necessary for good performance. In the absence of a computer the detectors should be accurately calibrated and matched. However, variations in source intensity are cancelled out since only intensity ratios are used in data reductions.

Instead of a plane polarized incident beam, a circularly polarized beam can be used. A 1/4 wavelength plate suitably oriented will convert any plane polarized light to circular polarization. This will not affect
the operation of the ellipsometer because the only
difference is 90° of phase delay between the "p" and
"s" polarized components which does not affect the
photodetectors. The results are identical to those
obtained using a 45° polarized incident beam.

In an experimental device, samples were measured with
reasonable accuracy at an incident angle of 70°. These
included dielectrics (glasses), semiconductors
(silicon) and conductors (gold and titanium). The
source was a 5 mw HeNe laser and the detectors were
(photodiode/Op-amp combinations) with a rise time of
about 100 nanoseconds. The intensity reflection
coefficients $R_p$ and $R_s$ could be observed directly
through the use of two digital ratiometers. Practical
applications of this invention include measurements
of values as follows:

1. Optical changes in materials undergoing short
   intense heat pulses.
2. Optical changes in materials undergoing fast
   chemical/physical reactions.
3. High resolution film growth rates on substrates.

In general, this invention provides a fast response,
general purpose polarimeter (simple design, no moving
parts).

The amplitude reflection coefficients for plane
polarized light are given by Fresnel Eqns. (Ref. 1):

$$(1) \quad r_s = \frac{N_1 \cos\phi - \sqrt{N_2^2 - N_1^2 \sin^2\phi}}{N_1 \cos\phi + \sqrt{N_2^2 - N_1^2 \sin^2\phi}} = \frac{\cos\phi - \sqrt{N^2 - \sin^2\phi}}{\cos\phi + \sqrt{N^2 - \sin^2\phi}}$$

$$(2)\ r_p = \frac{N_2^2\cos\phi - N_1\sqrt{N_2^2 - N_1^2\sin^2\phi}}{N_2^2\cos\phi + N_2\sqrt{N_2^2 - N_1^2\sin^2\phi}} = \frac{N^2\cos\phi - \sqrt{N^2 - \sin^2\phi}}{N^2\cos\phi - \sqrt{N^2 - \sin^2\phi}}$$

where $r_s$ and $r_p$ are the amplitude reflection coeffi-
cients, $N_1$ and $N_2$ are the indices of refraction of the
media (light is incident from medium 1 onto medium 2)
and $\phi$ is the angle of incidence as shown in FIG. 3.

FIG. 3 shows reflection and refraction at an interface
with p polarization. $N = N_2/N_1$ is the relative index
of refraction. In order to include absorption, $N_1$, $N_2$
and N are complex numbers and have the form $N = n - ik$
where n is the (real) index of refraction and k is
known as the extinction coefficient. From equation
1, N can be expressed in terms of $r_s$ as:

$$(3)\ N^2 = 1 - 4\frac{r_s}{(1+r_s)^2}\cos^2\phi$$

Using equations 2 and 3, $r_p$ can be derived as:

$$(4)\ r_p = r_s\frac{r_s - \cos 2\phi}{1 - r_s\cos 2\phi}\quad \text{(or equivalently)}\ r_p = \frac{\tan^2\phi - \frac{1-r_s}{1+r_s}}{\tan^2\phi + \frac{1-r_s}{1+r_s}}$$

Equation 4 can now be used to yield

$$(5)\ \cos\sigma_s = \frac{R_s - \frac{R_p}{R_s} + (1-R_p)\cos^2 2\phi}{2R_s^{1/2}(1 - \frac{R_p}{R_s})\cos 2\phi}$$

where $\sigma$ is the "s"-polarization phase shift on
reflection (i.e., $r_s = |r_s|e^{i\sigma}s$ and $R_p$, $R_s$ are the
"p" and "s" polarization intensity reflection coeffi-
cients respectively given by $R_p = |r_p|^2$ and
$R_s = |r_s|^2$.

Knowledge of $R_p$, $R_s$ and $\phi$ is therefore sufficient to determine both the amplitude phase of the "s"-polarization amplitude reflection coefficient-$r_s$ and therefore also $N = n-ik$ (using equation 3). The "p"-polarization amplitude reflection coefficient - $r_p$ can also be determined using equation 4.

Note that at an angle of $\phi = 45°$, equation 4 yields $r_p - r_s^2$ and equation 5 cannot be used to determine the "s"-polarization phase shift

$$(\cos \sigma_s \xrightarrow{\phi \rightarrow 45°} \frac{0}{0}).$$

References:

1.  J. D. Jackson, Classical Electrodynamics, Wiley (1975) pp. 278-82.

2.  P. S. Hauge, Techniques of Measurement of Polarization - Altering Properties of Linear Optical Systems, SPIE 112, Optical Polarimetry (1977).

3.  P. S. Hauge, Survey of Methods for the Complete Determination of a State of Polarization, SPIE 88, Polarized Light (1976).

4.  R. M. Azzam and N. M. Bashara, Ellipsometry and Polarized Light, North-Holland (1977).

5.  V. Brusic, The Application of Intensity Transients in Ellipsometry, Appl. Opt. 9, No. 7 (1970).

## Industrial Applicability

Technical advantages of the instant invention are as follows:

1)  requires less hardware,
2)  more accurate
    a) independent of uniformity of beam

    b) alignment of beam is not critical

    c) does not assume uniformity of sample over
       large area,

3) allows small beam size,

4) allows addition of focussing lens for improved
performance,

5) allows high speed, very accurate measurements -
no moving parts,

6) provides in situ, real time measurements for
experiments or process monitoring and control
in film growth studies.

CLAIMS

1.  An optical instrument comprising a source of a polarised light beam directed towards a sample position, means for supporting a sample in the sample position, and analysing means for reception of the beam reflected from the sample characterised in that the analysing means comprise a polarising beam splitter and a pair of detectors positioned respectively to receive the perpendicularly polarized portions of the light beam emergising from the beam splitter.

2.  An optical instrument as claimed in claim 1, further characterised in that the source comprises a laser light source providing a substantially plane polarised light beam, and means for further polarising the light beam to form a light beam plane polarised beam in a plane at 45 degrees to the plane of incidence on the sample.

3.  An optical instrument as claimed in claim 1 or 2, further characterised in that a second beam splitter splits the light beam and directs a portion thereof to a third detector and directs the remaining portion to the sample position.

4.  An instrument comprising a source of a polarized light beam directed towards a first beam splitter with a portion of said light beam split thereby passing to a normalizing detector and the remainder thereof passing to a sample position adapted for holding a sample to be measured, and means for supporting a sample in said sample position, characterised by comprising a polarizing beam splitter supported for reception of the reflection of said beam from the surface of a sample in said sample position and a pair of detectors for the parallel (p) and the perpendicularly (s) polarised beams positioned to receive the p and s portions of said light beam from said polarising beam splitter.

5.    An instrument comprising a source of a polarized light beam directed towards a sample position, means for supporting a sample in said sample position, a polarizing beam splitter supported for reception of the reflection of said beam from the surface of a sample in said sample position and a pair or detectors for p and s beams positioned to receive the p and s  portions of said light beam from said polarizing beam splitter.

FIG. 1

# FIG. 2

# FIG. 3

## DOCUMENTS CONSIDERED TO BE RELEVANT

| Category | Citation of document with indication, where appropriate, of relevant passages | Relevant to claim |
|---|---|---|
| X | US − A − 3 904 293 (S. GEE)<br>* claims 1, 2; abstract; column 2, lines 16 to 46; fig. 1 * | ,<br>1,5 |
| Y | * column 2, lines 20, 21; fig. 1 * | 2 |
| | — | |
| D,Y | SURFACE SCIENCE, Vol. 56, No. 1<br>June 1976, Amsterdam<br>T. SMITH "An automated scanning ellipso-<br>meter"<br>pages 212 to 220<br>* page 212 to page 213, second paragraph;<br>page 220, last paragraph; fig. 1 * | 1,2,5 |
| D,A | * fig. 1 * | 3,4 |
| | — | |
| Y | US − A − 3 653 767 (J.W. LISKOWITZ)<br>* claims 1, 2; abstract; column 3,<br>lines 48 to 56; fig. 1, 3 * | 1,5 |
| | — | |
| A | US − A − 3 995 957 (H.S. PILLOFF)<br>* claims 1, 3; abstract; column 1, lines<br>44 to 64; fig. * | 1,5 |
| | ———— | |

**CLASSIFICATION OF THE APPLICATION (Int. Cl. 3)**

G 01 N 21/21
G 01 J 4/04

**TECHNICAL FIELDS SEARCHED (Int.Cl. 3)**

G 01 J 4/00
G 01 N 21/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 06−12−1982 | HOFMANN |

EPO Form 1503.1  06.78